# EUROPEAN PATENT APPLICATION

(11) **EP 4 431 546 A1**
(43) Date of publication of application: **18.09.2024**
(21) Application number: 22892801.6
(22) Date of filing: 09.11.2022
(51) Int. Cl.: C08G 77/54

(54) **SELF-HEALING POLYMER MATERIAL**

(30) Priority: 10.11.2021 JP 2021183552
(71) Applicant: The University of Tokyo, Bunkyo-ku, Tokyo 113-8654 (JP); SHIN-ETSU CHEMICAL CO., LTD., Tokyo 1000005 (JP)
(72) Inventor: AIDA Takuzo, Tokyo 113-8654 (JP); ITOH Yoshimitsu, Tokyo 113-8654 (JP); FUJISAWA Yuta, Tokyo 113-8654 (JP); GOTO Yuta, Annaka-shi, Gunma 379-0224 (JP); MINEMURA Masahiko, Annaka-shi, Gunma 379-0224 (JP); NAKAGAWA Hideo, Tokyo 100-0005 (JP)
(74) Representative: Gilani, Anwar
(86) International application number: PCT/JP2022/041667
(87) International publication number: WO 2023/085303

(57) **Abstract**

Provided is a novel polymer material having a siloxane bond in a main chain and having an excellent self-healing property.

The copolymer contains at least one repeat unit represented by the following general formula (I), and at least one repeat unit represented by the following general formula (II).

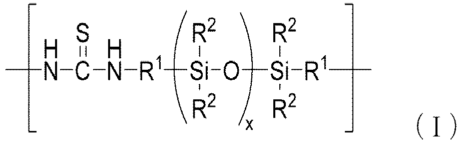

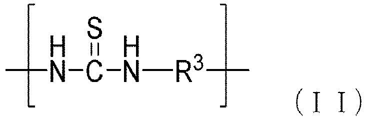

## Description

### Technical Field

The present invention relates to a novel copolymer, a self-healing material containing the copolymer, and a coating composition containing the copolymer.

### Background Art

In modern society, plastic is one of materials that support mass production and mass consumption, and various plastic materials are widely used. However, in recent years, the problem of a large amount of waste generated by plastic and resulting marine pollution has become serious.

One of solutions to this problem is plastic recycling technology, but in practice, the recycling process itself consumes a large amount of energy.

In addition, biodegradable plastic is degraded through a biological process, and therefore, if such plastic is popularized, the problem of energy consumption can be partially avoided, but there is no guarantee that a chemical structure selected mainly because of biological degradability also provides excellent material characteristics. In fact, bioplastic that is being put into practical use still has problems of strength and durability, which hinders the popularization of biodegradable plastic.

On the other hand, all living organisms including human beings, unlike their surrounding materials, have a self-healing function by which a damaged area is autonomously healed. In the human body, a healing function constantly works on various scales ranging from entities (molecules), which do not have a size large enough to be visible, such as DNA, to cells and tissues. That is, self-healing is an ultimate function that has been developed in order for organisms to survive for a long period of time.

In the 21^{st} century, materials having such a healing function have come to be reported. In particular, since about 10 years ago, soft materials such as gel and rubber, which, even when fractured, repeatedly heal any number of times under mild conditions, have been reported (Non Patent Literatures 1 and 2). This property is achieved exclusively by ingenious utilization of non-covalent interactions including hydrogen bonding. When a polymer material having a self-healing property is fractured, polymer chains enter between two fracture surfaces, interpenetrate and entwine, resulting in regeneration of tissues to their original state. However, since the movement of polymer chains forming a hard material such as glass is slow enough to be expressed as "freezing", such a material cannot be repaired unless it is heated and melted.

The present inventors have developed the world's first self-healing glass and overturned the conventional wisdom (Non Patent Literature 3). The developed glass is made from a polyether thiourea-based polymeric material. This polymeric material, whose surface is hard and smooth to the touch, nevertheless exhibits a special property from combined fracture surfaces when the fracture surfaces are pressed against each other. This property is surprising in light of the fact that both the elastic modulus and the mechanical strength of this material are significantly high with the elastic modulus being higher than 1 Gpa and the mechanical strength being 32 Mpa.

As described above, the polyether thiourea-based polymer material developed by the present inventors is a promising material as a self-healing glass, but has a problem that because of the presence of an ether bond in the main chain, the polyether thiourea-based polymer material is likely to absorb moisture, resultantly softens, and loses characteristics as a hard material. Therefore, self-healing glass having a self-healing property, robustness and moisture resistance is desired.

Silicone resins having a siloxane bond (Si-O-Si) in the main chain are excellent in heat resistance, weather resistance, water resistance, flame retardancy and the like, and capable of forming a cured film having a surface with high hardness, unlike other hydrocarbon-based organic resins, and therefore are widely used in applications such as surface protecting materials for various base materials, heat-resistant coating materials, weather-resistant coating materials, water repellents and various binders, and the fields thereof. Therefore, if a self-healing material having a siloxane bond can be developed, it may be possible to provide a polymer material which has a self-healing property and is excellent in heat resistance and the like.

### Citation List

### Non Patent Literature

Non Patent Literature 1: I. Odoriozola et al., "Catalyst-free room-temperature self-healing elastomers based on aromatic disulfide metathesis." Mater. Horiz., 1, 237-240 (2014). DOI: 10.1039/C3MH00061C
Non Patent Literature 2: L. Leibler et al., "Self-healing and thermoreversible rubber from supramolecular assembly." Nature, 451, 977-980 (2008). DOI: 10.1038/nature06669
Non Patent Literature 3: Yanagisawa, Nan, Okuro, Aida Science 359, 72-76 (2018).

### Summary of Invention

### Technical Problem

An object of the present invention is to provide a novel polymer material having a siloxane bond in a main chain and having an excellent self-healing property.

Another object of the present invention is to provide a method for producing the polymer material.

### Solution to Problem

The present inventors have extensively conducted studies for solving the above-described problems, and resultantly found that a novel silicone-based polymer material having a self-healing property can be provided by introducing a siloxane bond instead of an ether bond into a polymer chain having a self-healing property, and introducing a specific structure by copolymerization, leading to completion of the present invention.

Specifically, the present invention provides the following.
[1] A copolymer comprising at least one repeat unit represented by the following general formula (I): 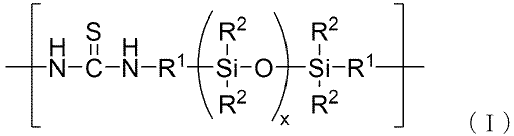 wherein
   R¹ represents a divalent hydrocarbon group having 1 to 10 carbon atoms;
   R² is independently a hydrogen atom or a group selected from an alkyl group having 1 to 8 carbon atoms and optionally substituted with a halogen atom, a phenyl group, a (meth)acryloyloxypropyl group, and a glycidoxypropyl group;
   each of the R² groups may be the same or different; and
   x is an integer of 1 or more, and
   at least one repeat unit represented by the following general formula (II): 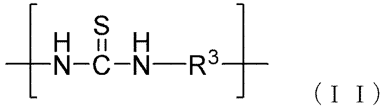
   wherein
      R³ is the following (a) or (b):
      (a) a substituted or unsubstituted alkylene group having 2 to 20 carbon atoms
      (b) the following formula (1): 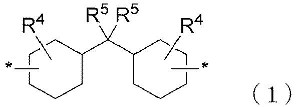 wherein
         R⁴ is independently a hydrogen atom or an alkyl group having 1 to 8 carbon atoms, and each of the R⁴ groups may be the same or different; and
         R⁵ is independently a hydrogen atom or an alkyl group having 1 to 8 carbon atoms,
         the two R⁵ groups may be the same or different, and
         * represents a bonding site.
[2] The copolymer according to [1], wherein the repeat unit represented by formula (I) and the repeat unit represented by formula (II) are randomly polymerized.
[3] The copolymer according to [1] or [2], wherein R² is a methyl group, and has a polystyrene-equivalent weight average molecular weight of 500 to 150,000 as measured by GPC.
[4] A self-healing material comprising the copolymer according to any one of [1] to [3].
[5] A non-covalent-type self-healing material comprising the copolymer according to any one of [1] to [3].
[6] A resin composition comprising the copolymer according to any one of [1] to [3], and a resin selected from polycarbonate, polymethyl acrylate, polymethyl methacrylate, polymethacrylate, polystyrene, polyethylene terephthalate, nylon, polypropylene, an epoxy resin, a silicone resin, and a combination of two or more thereof.
[7] A process for preparing a copolymer, the process comprising reacting a raw material containing a compound represented by the following general formula (III): 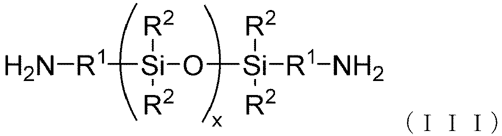
   wherein R¹ represents a divalent hydrocarbon group having 1 to 10 carbon atoms, R² is independently a hydrogen atom, or a group selected from an alkyl group having 1 to 8 carbon atoms and optionally substituted with a halogen atom, a phenyl group, a (meth)acryloyloxypropyl group and a glycidoxypropyl group, each of the R² groups may be the same or different, and x is an integer of 1 or more, and
   a compound represented by the following general formula (IV):

      H₂N-R³-NH₂ (IV)
   wherein R³ is the following (a) or (b):
      (a) a substituted or unsubstituted alkylene group having 2 to 20 carbon atoms
      (b) the following formula (1): 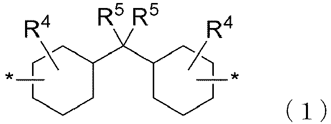
         wherein R⁴ is independently a hydrogen atom or an alkyl group having 1 to 8 carbon atoms, and each of the R⁴ groups may be the same or different, and
         R⁵ is independently a hydrogen atom or a group selected from alkyl groups having 1 to 8 carbon atoms, the two R⁵ groups may be the same or different, and * represents a bonding site
         with the following compound: 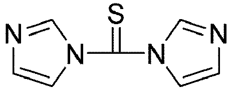
         the copolymer comprising a repeat unit represented by the following general formula (I): 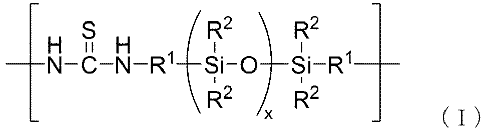
         wherein R¹, R² and x are the same as defined in formula (III), and
         a repeat unit represented by the following general formula (II): 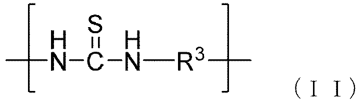
         wherein R³ is the same as defined in formula (IV). [8] A process for preparing a copolymer, the process comprising reacting a raw material containing at least one of a compound represented by the following general formula (III) : 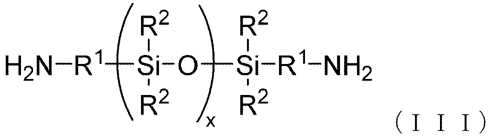
         wherein R¹ represents a divalent hydrocarbon group having 1 to 10 carbon atoms, R² is independently a hydrogen atom, or a group selected from an alkyl group having 1 to 8 carbon atoms and optionally substituted with a halogen atom, a phenyl group, a (meth)acryloyloxypropyl group and a glycidoxypropyl group, each of the R² groups may be the same or different, and x is an integer of 1 or more, and
         a compound represented by the following general formula (IV):

            H₂N-R³-NH₂ (IV)
         wherein R³ is the following (a) or (b):
            (a) a substituted or unsubstituted alkylene group having 2 to 20 carbon atoms
            (b) the following structural formula (1): 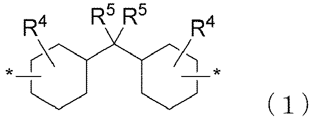
         wherein R⁴ is independently a hydrogen atom or an alkyl group having 1 to 8 carbon atoms, and each of the R⁴ groups may be the same or different, and
         R⁵ is independently a hydrogen atom or a group selected from alkyl groups having 1 to 8 carbon atoms, the two R⁵ groups may be the same or different, and * represents a bonding site,
         with a raw material containing at least one of a compound represented by the following general formula (V): 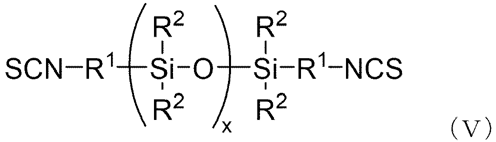
         wherein R¹ represents a divalent hydrocarbon group having 1 to 10 carbon atoms, R² is independently a hydrogen atom, or a group selected from an alkyl group having 1 to 8 carbon atoms and optionally substituted with a halogen atom, a phenyl group, a (meth)acryloyloxypropyl group and a glycidoxypropyl group, each of the R² groups may be the same or different, and x is an integer of 1 or more, and
         a compound represented by the following general formula (VI):

            SCN-R³-NCS ... (VI)
         wherein R³ is the following (a) or (b):
            (a) a substituted or unsubstituted alkylene group having 2 to 20 carbon atoms
            (b) the following formula (1): 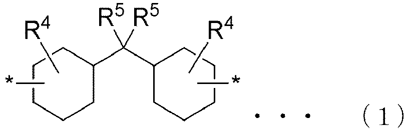
         wherein R⁴ is independently a hydrogen atom or an alkyl groups having 1 to 8 carbon atoms, and each of the R⁴ groups may be the same or different, and
         R⁵ is independently a hydrogen atom or a group selected from alkyl groups having 1 to 8 carbon atoms, the two R⁵ groups may be the same or different, and * represents a bonding site,
         with the proviso that a case wherein a raw material containing only a compound of formula (IV) and a raw material containing only formula (VI) are reacted is excluded,
         the copolymer comprising a repeat unit represented by the following general formula (I): 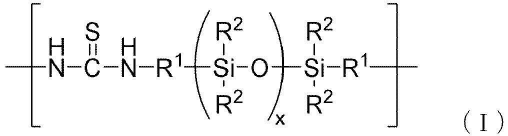
         wherein R¹, R² and x are the same as defined in formula (III), and
         a repeat unit represented by the following general formula (II): 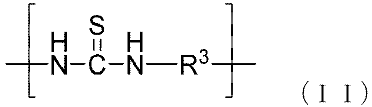
         wherein R³ is the same as defined in formula (IV).

### Advantageous Effects of Invention

According to the present invention, it is possible to provide a novel silicone-based polymer material having an excellent self-healing property.

### Description of Embodiments

### 1. Copolymer

One embodiment of the present invention is a copolymer including at least one repeat unit represented by the following general formula (I) and at least one repeat unit represented by the following general formula (II) (hereinafter, also referred to as "the inventive copolymer").

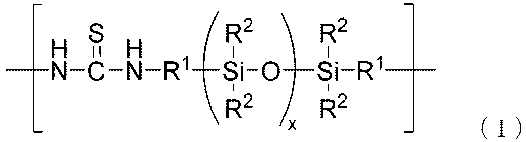

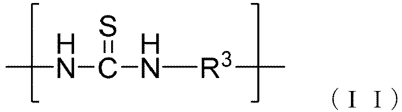

In the inventive copolymer, it is important that the repeat unit represented by formula (I) has a siloxane bond (Si-O-Si), and the copolymer has a repeat unit represented by formula (II) which has no siloxane bond in the main chain.

Without wishing to be bound by theory, a polymer containing only the repeat unit represented by formula (I) tends to be a liquid having high viscosity, so that it is difficult to obtain a solid-state material. On the other hand, by introducing the repeat unit of formula (II) to modify the siloxane-bonded portion into an alkyl chain, a solid-state polymer having a self-healing property can be obtained.

The inventive copolymer is also characterized by having a structure of -Si(R²)₂- at its end portion in addition to the structural unit of (Si(R²)₂-O)ₓ in formula (I). Thus, there is an advantage that the stability of the polymer is improved because hydrolysis does not occur.

In formula (I), R¹ represents a divalent hydrocarbon group having 1 to 10 carbon atoms. Examples of the divalent hydrocarbon group include linear or branched alkylene groups, arylene groups, heteroarylene groups, and cycloalkyl rings. Here, the arylene group and the heteroarylene group may be a monocyclic or condensed arylene and heteroarylene group, respectively. The divalent hydrocarbon group also includes a group in which an alkylene group is bonded to one end or both ends of an arylene group, a heteroarylene group or a cycloalkyl ring.

The divalent hydrocarbon group may have a substituent, and examples of the substituent include a methyl group, an ethyl group, a propyl group, and a phenyl group.

The two R¹ groups may be the same or different.

The divalent hydrocarbon group having 1 to 10 carbon atoms is preferably a linear or branched alkylene group having 1 to 10 carbon atoms, and particularly preferably a linear alkylene group having 1 to 10 carbon atoms (particularly preferably, a linear alkylene group having 1 to 3 carbon atoms).

In formula (I), R² is independently a hydrogen atom or a group selected from an alkyl group having 1 to 8 carbon atoms and optionally substituted with a halogen atom, a phenyl group, a (meth)acryloyloxypropyl group, and a glycidoxypropyl group.

The phenyl group may be substituted, and examples of the substituent include a methyl group, an ethyl group, and a vinyl group.

The each R² group may be the same or different.

R² is preferably an alkyl group having 1 to 8 carbon atoms and optionally substituted with a halogen atom, particularly preferably an alkyl group having 1 to 8 carbon atoms, more preferably a methyl group or an ethyl group, and especially preferably a methyl group.

In one preferred aspect of the inventive copolymer, each of all R² in formula (I) is a methyl group.

In formula (I), x is an integer of 1 or more. x is preferably 1 to 1,000, and more preferably 1 to 100. When x is small, a polymer having high strength is obtained. When x is large, a polymer having flexibility is obtained.

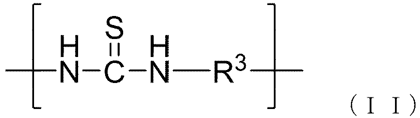

In formula (II), R³ is the following (a) or (b) .
(a) A substituted or unsubstituted alkylene group having 2 to 20 carbon atoms, preferably a substituted or unsubstituted alkylene group having 2 to 10 carbon atoms, more preferably a substituted or unsubstituted alkylene group having 4 to 8 carbon atoms.
   Examples of the substituent of the alkylene group include a methyl group, an ethyl group, and a phenyl group.
(b) A group represented by the following formula (1) .

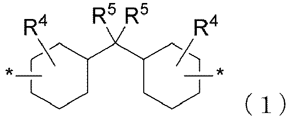

In formula (1), R⁴ is independently a hydrogen atom or an alkyl group having 1 to 8 carbon atoms, and the each R⁴ group may be the same or different.

Here, R⁵ is independently a hydrogen atom, or an alkyl group having 1 to 8 carbon atoms.

The two R⁵ groups may be the same or different.

Each of the R⁴ and R⁵ alkyl groups having 1 to 8 carbon atoms may be a substituted or unsubstituted alkyl group.

R⁴ is preferably a hydrogen atom or a methyl group.

In one preferred aspect of the inventive copolymer, each of all R⁴ in the two cyclohexyl rings of formula (1) is a hydrogen atom.

R⁵ is preferably a hydrogen atom or a methyl group.

In one preferred aspect of the inventive copolymer, each of two R⁵ is a hydrogen atom.

In formula (1), * represents a bonding site.

In the inventive copolymer, the repeat unit represented by formula (I) and the repeat unit represented by formula (II) may be randomly or alternatingly polymerized. In both the polymerization forms, a self-healing property is developed. A copolymer obtained by randomly polymerizing the repeat unit represented by formula (I) and the repeat unit represented by formula (II) can exhibit a self-healing property around room temperature. Thus, a random copolymer is more preferable than an alternating copolymer in that the self-healing temperature is lowered.

In the inventive copolymer, the ratio of the repeat unit represented by formula (I) to the repeat unit represented by formula (II) can be arbitrarily selected between 100 : 0 and 0 : 100 (except for 100 : 0 and 0 : 100) on a molar basis.

When R³ is a substituted or unsubstituted alkylene group having 2 to 20 carbon atoms, the ratio of the repeat unit represented by formula (I) to the repeat unit represented by formula (II) is preferably 60 : 40 to 10 : 90, and more preferably 60 : 40 to 40 : 60 on a molar basis.

When R³ is a group represented by formula (1), the ratio of the repeat unit represented by formula (I) to the repeat unit represented by formula (II) is preferably 90 : 10 to 50 : 50, and more preferably 80 : 20 to 60 : 40 on a molar basis. When R³ is a group represented by formula (1), the polymer chain tends to have high stability (rigidity), leading to a rise in Tg, but a good self-healing property is obtained when the above-described range is satisfied.

The inventive copolymer has a polystyrene-equivalent weight average molecular weight of 500 to 150,000, preferably 2,000 to 100,000 as measured by GPC. When the molecular weight is in a preferred range, a self-healing property is exhibited at low temperature.

The inventive copolymer has a glass transition temperature of, for example, -100°C to 100°C.

### 2. Self-healing material

Another aspect of the present invention is a self-healing material containing the inventive copolymer.

This self-healing material can be used without being dissolved either in air or in water, and exhibits a self-healing characteristic either in air or in water. In the present specification, the term "self-healing" means that even if a material undergoes damage such as cutting, the damaged area is healed without addition of an auxiliary agent from outside. It is preferable that the damaged area can be repeatedly healed. It is considered that the self-healing using the inventive copolymer does not involve a chemical reaction, and relies only on the crosslinked structure of a non-covalent bond. That is, the copolymer is a non-covalent-type self-healing material, and can be repeatedly self-healed.

That is, one aspect of the present invention is a non-covalent-type self-healing material containing the inventive copolymer.

The self-healing property of the inventive copolymer exhibits a high self-healing property such that the tensile strength is recovered to 95% or more of that before cutting, for example, 12 hours after the fracture surfaces are brought into recontact with each other to perform self-healing. It is also possible to recover the tensile strength to 100% after 12 hours plus 6 hours (18 hours after the recontact). In general, many of self-healing materials are soft materials, but the inventive copolymer has mechanical strength so sufficient that the copolymer itself can be used as a member that is required to have mechanical strength.

The self-healing material of the present invention can be self-healing by a method including the step of bringing fracture surfaces of a self-healing material into recontact with each other, followed by anchoring. In a preferred embodiment, the fracture surfaces can be held by the anchoring for, for example, 20 seconds to 12 hours or 1 minute to 6 hours, or may be held longer to consolidate the rejoining. It is also possible to carry out the step at room temperature.

In a preferred embodiment, a step of heating the material to a temperature equal to or higher than the glass transition point of the polymer compound may be provided after the anchoring step in order to accelerate the self-healing. For example, the material can be heated to a temperature higher than the glass transition point by 40°C, 30°C, 20°C, 10°C. The upper limit of the temperature is not specified, but may be, for example, 200°C or lower and 100°C or lower for convenience of operation. Alternatively, instead of the heating step, a step of performing ultrasonic treatment may be provided to accelerate the self-healing. As conditions for the ultrasonic treatment, for example, the conditions for the ultrasonic treatment described above for the bonding method.

### 3. Resin composition

The inventive copolymer exhibits the above-described excellent characteristics by having the above-described repeat units. Therefore, even when known means is used to introduce other repeat units or modify side chains within the bounds of not compromising the above-mentioned excellent characteristics, the resulting polymer or copolymer is within the scope of the present invention. The inventive copolymer exhibits excellent characteristics as an adhesive as well as a self-healing material even when used in a single form. Therefore, even when known means is used to add desired additives for controlling characteristics within the bounds of not compromising the excellent characteristics, the composition containing the additives is within the scope of the present invention.

Another aspect of the present invention is a resin composition containing the inventive copolymer and one or more other thermoplastic resins. Here, the other thermoplastic resin is not limited, and may be a common thermoplastic resin such as polypropylene, or a thermoplastic resin called engineering plastic such as polycarbonate or polyamide (nylon or the like). The other thermoplastic resin is selected from the group consisting of, for example, polycarbonate, polymethyl acrylate, polymethyl methacrylate, polymethacrylate, polystyrene, polyethylene terephthalate, nylon, polypropylene, an epoxy resin, a silicone resin, and a combination of two or more thereof.

The resin composition of the present invention is used for fatigue-resistant materials and stress relaxation materials.

This fatigue-resistant material can be used without being dissolved either in air or in water, and exhibits a fatigue resistance characteristic either in air or in water. In the present specification, the fatigue resistance means that even when repeatedly stressed from stretching or the like, a material quickly undergoes stress relaxation, and can simultaneously recover a Young's modulus before it is stressed. Under such conditions, an ordinary resin has fatigue accumulated by repeated stress, and falls into fracture or the like without recovering the Young's modulus. Therefore, the fatigue-resistant material according to the present invention is also a stress relaxation material. It is considered that the fatigue resistance and stress relaxation using the inventive copolymer does not involve a chemical reaction, and relies only on the crosslinked structure of a non-covalent bond. The fatigue resistance and stress relaxation can be repeatedly exhibited.

### 4. Coating composition

Another aspect of the present invention is a coating composition containing the inventive copolymer, water, an organic solvent, or a mixture thereof (hereinafter, also referred to as the "inventive coating composition").

The inventive coating composition may contain, as a resin component, a resin different from and in addition to the inventive copolymer as long as the excellent characteristics are not compromised. The resin that can be used and the resin formed from the resin component by curing during coating are not limited, and examples thereof include resins that are commonly used in the coating industry.

Specific examples thereof include acrylic resins, silicone resins, acrylic silicone resins, styrene-acrylic copolymer resins, polyester resins, fluororesins, rosin resins, petroleum resins, coumarone resins, phenol resins, urethane resins, melamine resins, urea resins, epoxy resins, cellulose resins, xylene resins, alkyd resins, aliphatic hydrocarbon resins, butyral resins, maleic acid resins, fumaric acid resins, vinyl resins (polyvinylidene chloride and the like), amine resins, and ketimine resins. These resins may be used alone or in combination of two or more thereof.

The organic solvent that can be used in the inventive coating composition is not limited, and examples thereof include organic solvents that are commonly used for paints. It is possible to use, for example, an alcohol (isopropyl alcohol, ethanol, butanol or the like), a ketone-based solvent (methyl ethyl ketone, acetone or the like), an ester-based solvent (ethyl acetate or butyl acetate), toluene, xylene, an amide-based solvent (dimethylacetamide or the like), or the like.

Two or more organic solvents can be mixed and used. A mixture of water and an organic solvent can also be used.

The inventive coating composition may contain a pigment, or may be a coating composition that gives a transparent coating film free of a pigment.

The organic solvent that can be used for the inventive coating composition is not limited, and examples thereof include pigments that are commonly used in the paint industry. Specific examples thereof include coloring pigments such as titanium dioxide, iron oxide and carbon black; extender pigments such as silica, talc, mica, calcium carbonate and barium sulfate; antirust pigments such as zinc, zinc phosphate, aluminum phosphate, zinc molybdate, barium metaborate and hydrocalumite; and luster pigments such as aluminum, nickel, chromium, tin, copper, silver, platinum, gold, stainless steel and glass flakes.

The content of the inventive copolymer in the inventive coating composition is, for example, 0.1 wt% to 80 wt%.

The inventive coating composition may contain various components well known by those skilled in the art, such as a pigment dispersant, a thickener, a surface conditioner, a film formation aid, an ultraviolet absorber, an antioxidant, a flame retardant, an antistatic agent and an antirust agent.

The means for applying the inventive coating composition is not limited, and may be known coating means, for example, spray coating, roller coating, brush coating, trowel coating or spatula coating.

The inventive coating composition can be used for, for example, surfaces of various display elements such as a liquid crystal display and an EL display, and surfaces of window glass.

Covered articles obtained by applying the inventive coating composition to the above-mentioned articles are also within the scope of the present invention.

### 5. Process for preparing inventive copolymer

Another embodiment of the present invention is a process for preparing a copolymer, the process including reacting a raw material containing a compound represented by the following general formula (III): 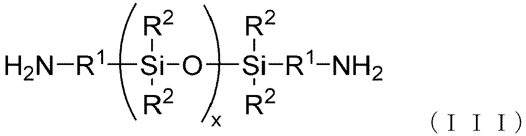 and
a compound represented by the following general formula (IV):

   H₂N-R³-NH₂ (IV)
with the following compound: 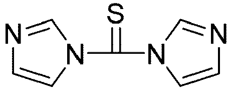
the copolymer containing a repeat unit represented by the following general formula (I) and a repeat unit represented by the following general formula (II) (hereinafter, referred to as "the inventive preparation process 1"): 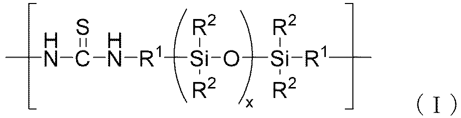
R¹, R² and x are the same as described for the inventive copolymer 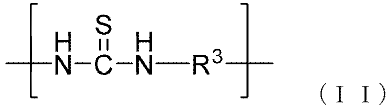
R³ is the same as described for the inventive copolymer.
R¹, R² and x in formula (III), which are the same as described for the inventive copolymer, will be described in details below.

In formula (III), R¹ represents a divalent hydrocarbon group having 1 to 10 carbon atoms. Examples of the divalent hydrocarbon group include linear or branched alkylene groups, arylene groups, heteroarylene groups, and cycloalkyl rings. Here, the arylene group and the heteroarylene group may be a monocyclic or condensed arylene and heteroarylene group, respectively. The divalent hydrocarbon group also includes a group in which an alkylene group is bonded to one end or both ends of an arylene group, a heteroarylene group or a cycloalkyl ring.

The divalent hydrocarbon group R¹ may have a substituent, and examples of the substituent include a methyl group, an ethyl group, a propyl group, and a phenyl group.

The two R¹ groups may be the same or different.

The divalent hydrocarbon group R¹ having 1 to 10 carbon atoms is preferably a linear or branched alkylene group having 1 to 10 carbon atoms, and particularly preferably a linear alkylene group having 1 to 10 carbon atoms.

R² is independently a hydrogen atom or a group selected from an alkyl group having 1 to 8 carbon atoms and optionally substituted with a halogen atom, a phenyl group, a (meth)acryloyloxypropyl group, and a glycidoxypropyl group, and the each R² group may be the same or different. The phenyl group may be substituted, and examples of the substituent include a methyl group, an ethyl group, and a vinyl group.

R² is preferably an alkyl group having 1 to 8 carbon atoms and optionally substituted with a halogen atom, particularly preferably an alkyl group having 1 to 8 carbon atoms, more preferably a methyl group or an ethyl group, and especially preferably a methyl group.

In one preferred aspect, each of all R² in formula (III) is a methyl group.

In formula (III), x is an integer of 1 or more. x is preferably 1 to 1,000, and more preferably 1 to 100.

R³ in formula (IV), which are the same as described for the inventive copolymer, will be described in details below.

In formula (IV), R³ is the following (a) or (b).
(a) A substituted or unsubstituted alkylene group having 2 to 20 carbon atoms, preferably a substituted or unsubstituted alkylene group having 2 to 10 carbon atoms, more preferably a substituted or unsubstituted alkylene group having 4 to 8 carbon atoms.
   Examples of the substituent of the alkylene group include a methyl group, an ethyl group, and a phenyl group.
(b) Following formula (1).

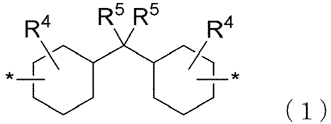

In formula (1), R⁴ is independently a hydrogen atom or an alkyl group having 1 to 8 carbon atoms, and the each R⁴ group may be the same or different.

R⁵ is independently a hydrogen atom, or a group selected from alkyl groups having 1 to 8 carbon atoms, and the two R⁵ groups may be the same or different.

Each of the R⁴ and R⁵ alkyl groups having 1 to 8 carbon atoms may be a substituted or unsubstituted alkyl group.

R⁴ is preferably a hydrogen atom or a methyl group.

In one preferred aspect, each of all R⁴ in the two cyclohexyl rings of formula (I) is a hydrogen atom.

R⁵ is preferably a hydrogen atom or a methyl group.

In one preferred aspect, each of two R⁵ is a hydrogen atom.

* represents a bonding site.

The molar ratio of both compounds in the mixture containing a compound represented by formula (III) and a compound represented by formula (IV) can be appropriately determined according to a desired molar ratio of the repeat units of formulae (I) and (II) in the copolymer as an ultimate product.

A reaction solution is prepared in which a compound represented by formula (III) and a compound represented by formula (IV) are dissolved in an organic solvent (for example, dimethylformamide or the like). To the reaction solution is added dropwise a solution in which a diimidazole having the following structure is dissolved in an organic solvent (for example, dimethylimidazole) in an amount equal, on a molar basis, to the total amount of the compound represented by formula (III) and the compound represented by formula (IV). The mixture is reacted with stirring around room temperature for 24 to 72 hours. Thereafter, a poor solvent (for example, hexafluoro-2-propanol/methanol (volume ratio = 1/20)) is added, the mixture is centrifuged, and the residue is dried under reduced pressure. In this way, a copolymer can be obtained.

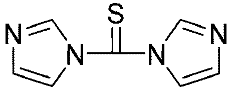

Another embodiment of the present invention is a process for preparing a copolymer, the process including reacting a raw material containing at least one of a compound represented by the following general formula (III) : 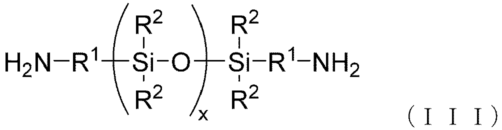
wherein R¹, R² and x are the same as described for the inventive preparation process 1, and
a compound represented by the following general formula (IV):

   **H₂N-R³-NH₂** (IV)
wherein R³ is the same as described for the inventive preparation process 1,
with a raw material containing a compound represented by the following general formula (V): 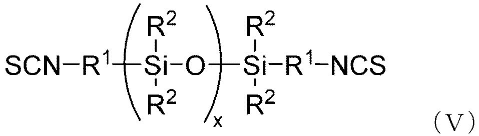
wherein R¹, R² and x are the same as described in formula (III), and
a compound represented by the following general formula (VI):

   **SCN-R³-NCS** ... (VI)
wherein R³ is the same as described in formula (IV),
with the proviso that a raw material containing only a compound of formula (IV) and a raw material containing only formula (VI) are not reacted,
the copolymer containing a repeat unit represented by the following general formula (I): 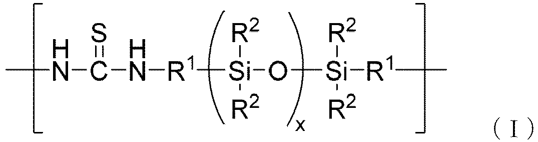
wherein R¹, R² and x are the same as described for the inventive copolymer, and
a repeat unit represented by the following general formula (II): 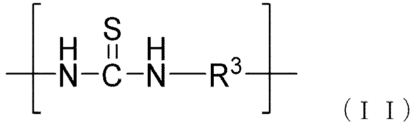
wherein R³ is the same as described for the inventive copolymer
(hereinafter, also referred to as "the inventive preparation process 2").

The inventive preparation process 2 includes (i) a process in which a compound represented by formula (III) and a compound represented by formula (VI) are reacted; (ii) a process in which a compound represented by formula (IV) and a compound represented by formula (V) are reacted; (iii) a process in which a compound represented by formula (III) and a compound represented by formula (V) are reacted; (iv) a process in which a raw material containing a compound represented by formula (III) and a compound represented by formula (IV) and a compound represented by formula (V) are reacted; (v) a process in which a raw material containing a compound represented by formula (III) and a compound represented by formula (IV) and a compound represented by formula (VI) are reacted; (vi) a process in which a compound represented by formula (III) and a raw material containing a compound represented by formula (V) and a compound represented by formula (VI) are reacted; and (vii) a process in which a compound represented by formula (IV) and a raw material containing a compound represented by formula (V) and a compound represented by formula (VI) are reacted. However, in the inventive preparation process 2, a case wherein a raw material containing only a compound of formula (IV) and a raw material containing only formula (VI) are reacted is excluded.

A reaction solution is prepared in which a raw material containing at least one selected from the group consisting of a compound represented by formula (III) and a compound represented by formula (IV) is dissolved in an organic solvent (for example, DMF). To the reaction solution is added dropwise a raw material containing at least one selected from the group consisting of a compound represented by formula (V) and a compound represented by formula (VI) in an amount equal, on a molar basis, to the total amount of the raw material. The mixture is reacted with stirring around room temperature for 24 to 72 hours. Thereafter, a poor solvent (for example, hexafluoro-2-propanol/methanol (volume ratio = 1/20)) is added, the mixture is centrifuged, and the residue is dried under reduced pressure. In this way, a copolymer can be obtained.

### Examples

Although the present invention will be described in more detail below with examples and comparative examples, the present invention is not limited to the following examples. Note that hereinafter, the weight average molecular weight is a standard polystyrene-equivalent value obtained by performing measurement with a GPC apparatus (HLC -8320 manufactured by Tosoh Corporation) using tetrahydrofuran (THF) as a developing solvent. In addition, "co" in the following structural formulae denotes a copolymer.

### [1] Method for preparing copolymer

### [Example 1]

While 4.9 g (0.028 mol) of 1,1'-thiocarboimidazole (manufactured by FUJIFILM Wako Pure Chemical Corporation) and 50.0 g of dimethylformamide (manufactured by FUJIFILM Wako Pure Chemical Corporation) were stirred in a 200 mL flask, 12.0 g (0.022 mol) of 1,7-bis(3-aminopropyl)-1,1,3,3,5,5,7,7-octamethyltetrasiloxane and 1.2 g (0.006 mol) of bis(4-aminocyclohexyl)methane (M0699 manufactured by Tokyo Chemical Industry Co., Ltd.) were added dropwise thereto. The mixture was stirred at 25°C for 24 hours, washed with water, and then distilled off under reduced pressure to obtain a yellow solid. The result of ¹H-NMR measurement showed that the product was a copolymer having a repeat unit represented by the following structural formula (A) (weight average molecular weight: 5,500, n = 10.5 (n is a weight average polymerization degree)).

¹H-NMR(300 MHz,CDCl₃), 0.00 (br, SiCH3), 0.50 (br, SiCH2), 1.56 (br, CH2), 0.87-2.04 (br, CH, CH2), 3.36 (br, C(S)NHCH2), 6.00 (br, C(S)NH)

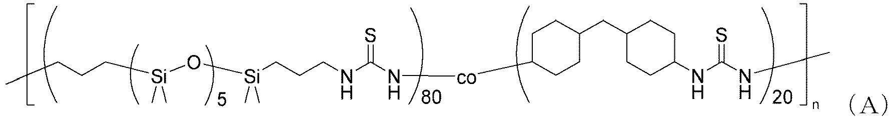

### [Example 2]

While 4.9 g (0.028 mol) of 1,1'-thiocarboimidazole (manufactured by FUJIFILM Wako Pure Chemical Corporation) and 50.0 g of dimethylformamide (manufactured by FUJIFILM Wako Pure Chemical Corporation) were stirred in a 200 mL flask, 10.6 g (0.019 mol) of 1,7-bis(3-aminopropyl)-1,1,3,3,5,5,7,7-octamethyltetrasiloxane and 1.7 g (0.008 mol) of bis(4-aminocyclohexyl)methane (M0699 manufactured by Tokyo Chemical Industry Co., Ltd.) were added dropwise thereto. The mixture was stirred at 25°C for 24 hours, washed with water, and then distilled off under reduced pressure to obtain a yellow solid. The result of ¹H-NMR measurement showed that the product was a copolymer having a repeat unit represented by the following structural formula (B) (weight average molecular weight: 5,000, n = 10) .

¹H-NMR(300 MHz,CDCl₃), 0.00 (br, SiCH3), 0.49 (br, SiCH2), 1.55 (br, CH2), 0.85-2.01 (br, CH, CH2), 3.34 (br, C(S)NHCH2), 6.04 (br, C(S)NH)

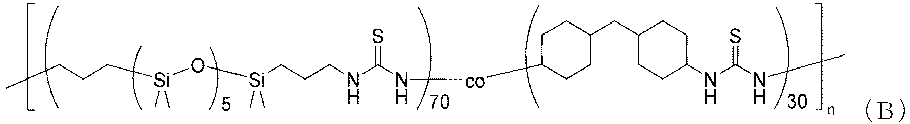

### [Example 3]

While 5.0 g (0.028 mol) of 1,1'-thiocarboimidazole (manufactured by FUJIFILM Wako Pure Chemical Corporation) and 50.0 g of dimethylformamide (manufactured by FUJIFILM Wako Pure Chemical Corporation) were stirred in a 200 mL flask, 9.2 g (0.017 mol) of 1,7-bis(3-aminopropyl)-1,1,3,3,5,5,7,7-octamethyltetrasiloxane and 2.4 g (0.011 mol) of bis(4-aminocyclohexyl)methane (M0699 manufactured by Tokyo Chemical Industry Co., Ltd.) were added dropwise thereto. The mixture was stirred at 25°C for 24 hours, washed with water, and distilled off under reduced pressure to obtain a yellow solid. The result of ¹H-NMR measurement showed that the product was a copolymer having a repeat unit represented by the following structural formula (C) (weight average molecular weight: 8,300, n = 18).

¹H-NMR(300 MHz,CDCl₃), 0.00 (br, SiCH3), 0.48 (br, SiCH2), 1.56 (br, CH2), 0.95-2.02 (br, CH, CH2), 3.35 (br, C(S)NHCH2), 6.08 (br, C(S)NH)

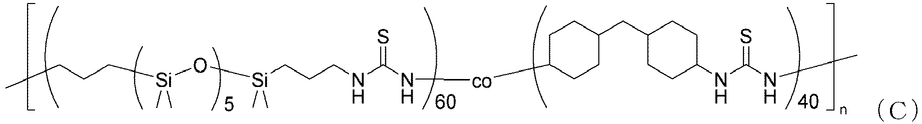

### [Example 4]

While 5.9 g (0.033 mol) of 1,1'-thiocarboimidazole (manufactured by FUJIFILM Wako Pure Chemical Corporation) and 50.0 g of dimethylformamide (manufactured by FUJIFILM Wako Pure Chemical Corporation) were stirred in a 200 mL flask, 10.8 g (0.020 mol) of 1,7-bis(3-aminopropyl)-1,1,3,3,5,5,7,7-octamethyltetrasiloxane and 1.5 g (0.013 mol) of 1,6-diaminohexane (D0095 manufactured by Tokyo Chemical Industry Co., Ltd.) were added dropwise thereto. The mixture was stirred at 25°C for 24 hours, washed with water, and then distilled off under reduced pressure to obtain a yellow solid. The result of ¹H-NMR measurement showed that the product was a copolymer having a repeat unit represented by the following structural formula (D) (weight average molecular weight: 1,900, n = 4.5).

¹H-NMR (300 MHz, CDCl₃), 0.00 (br, SiCH3), 0.50 (br, SiCH2), 1.30 (br, CH2), 1.54 (br, CH2), 2.10-2.23 (br, CH2), 3.39 (br, C(S)NHCH2), 8.08 (br, C(S)NH)

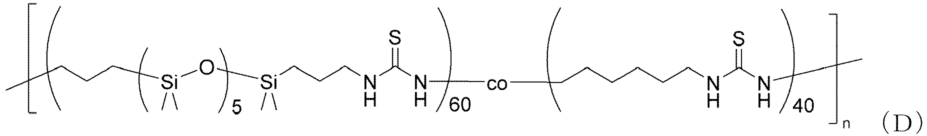

### [Example 5]

While 2.2 g (0.007 mol) of bis(4-isothiocyanatecyclohexyl)methane (BCHDNCS manufactured by Nippon Terpene Chemicals, Inc.) and 50.0 g of dimethylformamide (manufactured by FUJIFILM Wako Pure Chemical Corporation) were stirred in a 200 mL flask, 4.0 g (0.007 mol) of 1,7-bis(3-aminopropyl)-1,1,3,3,5,5,7,7-octamethyltetrasiloxane was added dropwise thereto. The mixture was stirred at 25°C for 24 hours, and then distilled off under reduced pressure to obtain a yellow solid. The result of ¹H-NMR measurement showed that the product was a copolymer having a repeat unit represented by the following structural formula (E) (weight average molecular weight: 110,000, n = 129).

¹H-NMR (300 MHz, DMSO-d₆), 0.00 (br, SiCH3), 0.43 (br, SiCH2), 1.41 (br, CH2), 0.84-1.84 (br, CH, CH2), 3.25 (br, C(S)NHCH2), 7.15 (br, C(S)NH)

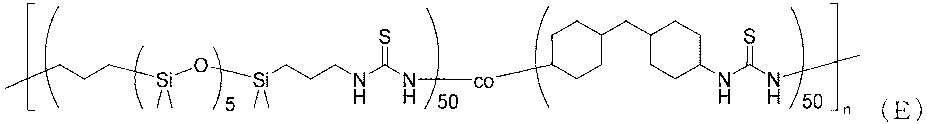

### [Example 6]

While 0.2 g (0.0007 mol) of bis(4-isothiocyanatecyclohexyl)methane (BCHDNCS manufactured by Nippon Terpene Chemicals, Inc.) and 50.0 g of dimethylformamide (manufactured by FUJIFILM Wako Pure Chemical Corporation) were stirred in a 200 mL flask, 2.0 g (0.0007 mol) of aminosilicone (X-22-161B manufactured by Shin-Etsu Chemical Co., Ltd.) was added dropwise thereto. The mixture was stirred at 25°C for 24 hours, and then distilled off under reduced pressure to obtain a colorless transparent solid.

The result of ¹H-NMR measurement showed that the product was a copolymer having a repeat unit represented by the following structural formula (F) (weight average molecular weight: 5,200, n = 2).

¹H-NMR (300 MHz, DMSO-d₆), -0.12 (br, SiCH3), 0.32 (br, SiCH2), 1.31(br, CH2), 0.69-1.69 (br, CH, CH2), 3.28 (br, C(S)NHCH2), 5.62 (br, C(S)NH)

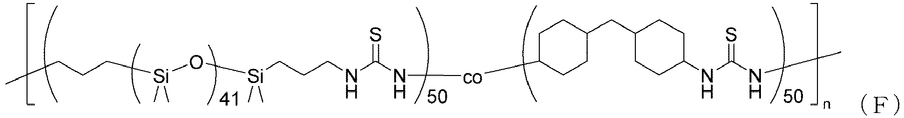

### [Example 7]

While 2.7 g (0.014 mol) of 1,6-hexane diisothiocyanate (HDNCS manufactured by Nippon Terpene Chemicals, Inc.) and 50.0 g of dimethylformamide (manufactured by FUJIFILM Wako Pure Chemical Corporation) were stirred in a 200 mL flask, 7.5 g (0.014 mol) of 1,7-bis(3-aminopropyl)-1,1,3,3,5,5,7,7-octamethyltetrasiloxane was added dropwise thereto. The mixture was stirred at 25°C for 24 hours, and then distilled off under reduced pressure to obtain a light yellow solid. The result of ¹H-NMR measurement showed that the product was a copolymer having a repeat unit represented by the following structural formula (G) (weight average molecular weight: 98,000, n = 131).

¹H-NMR (300 MHz, DMSO-d₆), 0.00 (br, SiCH3), 0.44 (br, SiCH2), 1.41 (br, CH2), 1.58 (br, CH2), 2.45-2.83 (br, CH2), 3.59 (br, C(S)NHCH2), 7.22 (br, C(S)NH)

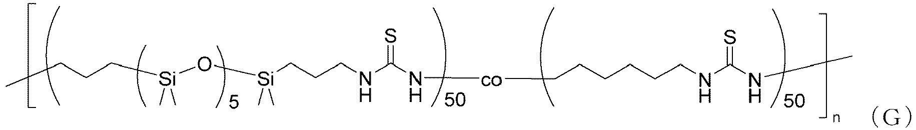

### [Example 8]

While 4.8 g (0.024 mol) of 1,6-hexane diisothiocyanate (HDNCS manufactured by Nippon Terpene Chemicals, Inc.) and 50.0 g of dimethylformamide (manufactured by FUJIFILM Wako Pure Chemical Corporation) were stirred in a 200 mL flask, 6.0 g (0.024 mol) of 1,3-bis(3-aminopropyl)tetramethyldisiloxane was added dropwise thereto. The mixture was stirred at 25°C for 24 hours, and then distilled off under reduced pressure to obtain a light yellow solid. The result of ¹H-NMR measurement showed that the product was a copolymer having a repeat unit represented by the following structural formula (H) (weight average molecular weight: 98,000, n = 218).

¹H-NMR (300 MHz,DMSO-d₆), 0.00 (br, SiCH3), 0.42 (br, SiCH2), 1.22 (br, CH2), 1.41 (br, CH2), 2.45-2.84 (br, CH, CH2), 3.26 (br, C(S)NHCH2), 7.24 (br, C(S)NH)

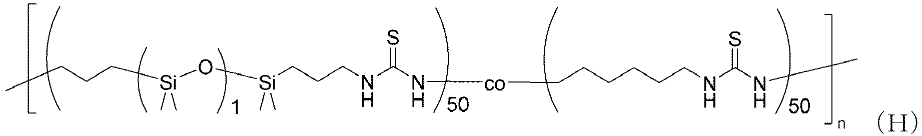

### [Comparative Example 1]

While 2.7 g (0.015 mol) of 1,1'-thiocarboimidazole (manufactured by FUJIFILM Wako Pure Chemical Corporation) and 50.0 g of dimethylformamide (manufactured by FUJIFILM Wako Pure Chemical Corporation) were stirred in a 200 mL flask, 8.2 g (0.015 mol) of 1,7-bis(3-aminopropyl)-1,1,3,3,5,5,7,7-octamethyltetrasiloxane was added dropwise thereto. The mixture was stirred at 25°C for 24 hours, washed with water, and then distilled off under reduced pressure to obtain a yellow viscous liquid. The result of ¹H-NMR measurement showed that the product was an organosilicon compound having a repeat unit represented by the following structural formula (a) (weight average molecular weight: 3,200, n = 5).

¹H-NMR (300 MHz, CDCl₃), 0.00 (br, SiCH3), 0.50 (br, SiCH2), 1.57 (br, CH2), 3.36 (br, C(S)NHCH2), 8.24 (br, C(S)NH)

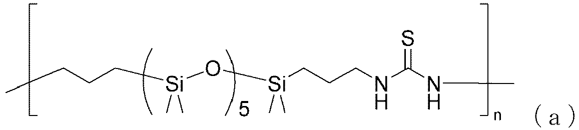

### [Comparative Example 2]

While 2.7 g (0.015 mol) of 1,1'-thiocarboimidazole (manufactured by FUJIFILM Wako Pure Chemical Corporation) and 50.0 g of dimethylformamide (manufactured by FUJIFILM Wako Pure Chemical Corporation) were stirred in a 200 mL flask, 3.2 g (0.015 mol) of bis(4-aminocyclohexyl)methane (M0699 manufactured by Tokyo Chemical Industry Co., Ltd.) was added dropwise thereto. The mixture was stirred at 25°C for 24 hours, washed with water, and then distilled off under reduced pressure to obtain a yellow solid. The result of ¹H-NMR measurement showed that the product was an organic compound having a repeat unit represented by the following structural formula (b) (measurement of the weight average molecular weight was impossible because the compound was not soluble in a developing solvent (THF) for GPC) .

¹H-NMR (300 MHz, DMSO-d₆), 0.84-1.84 (br, CH, CH2), 7.15 (br, C(S)NH)

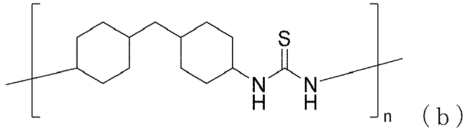

### [Comparative Example 3]

While 2.7 g (0.015 mol) of 1,1'-thiocarboimidazole (manufactured by FUJIFILM Wako Pure Chemical Corporation) and 50.0 g of dimethylformamide (manufactured by FUJIFILM Wako Pure Chemical Corporation) were stirred in a 200 mL flask, 2.2 g (0.015 mol) of 1,8-diaminooctane (D0107 manufactured by Tokyo Chemical Industry Co., Ltd.) was added dropwise thereto. The mixture was stirred at 25°C for 24 hours, washed with water, and then distilled off under reduced pressure to obtain a yellow solid. The result of ¹H-NMR measurement showed that the product was an organic compound having a repeat unit represented by the following structural formula (c) (measurement of the weight average molecular weight was impossible because the compound was not soluble in a developing solvent (THF) for

### GPC) .

¹H-NMR (300 MHz, DMSO-d₆), 1.22 (br, CH2), 1.41 (br, CH2), 3.24-3.27 (br, C(S)NHCH2), 7.23 (br, C(S)NH)

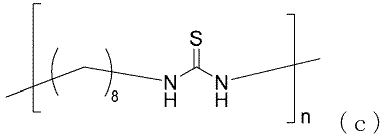

### [2] Self-healing test

For the polymers of Synthesis Examples 1 to 6 and Synthesis Comparative Example 3, a test for evaluating the self-healing property was conducted using a rheometer (Anton Paar model MCR-302).

### [Preparation of sample]

A dried solid sample was molded on a hot plate into a disk shape having a diameter of 8 mm and a thickness of 1 mm.

### [Test method]

Two disk-shaped samples were prepared. One of the disk-shaped samples was fixed on a jig having a diameter of 8 mm, and the other was fixed on a stage. A square Teflon sheet 10 mm on a side and 0.1 mm in thickness with a hole 1 mm in diameter at the center was sandwiched between the two disk-shaped samples. First, the two disk-shaped samples were pressed on heating, fused through the hole of the Teflon sheet, and then cooled to 24°C. Next, the jig was pulled up at a speed of 33 pm/s, and the disk-shaped samples fused through the hole were broken.

Subsequently, the two disk-shaped samples were set at a predetermined temperature, pressed at a pressure of 1 MPa for 1 hour, and then returned to 24°C. Next, the jig was pulled up at a speed of 33 pm/s, and the stress applied to the jig was measured.

### [Test results]

### Copolymer (A)

-20°C: 9.0 MPa, -16°C: 10.4 MPa, -12°C: 14.2 MPa, - 8°C: 12.7 MPa, -4°C: 17.2 MPa, 0°C: 18.7 MPa, 4°C: 21.3 MPa, 8°C: 28.6 MPa, 12°C: 37.7 MPa, 16°C: 43.2 MPa, 20°C: 44.8 MPa, 24°C: 44.9MPa

### Copolymer (B)

-20°C: 0.03 MPa, -16°C: 0.06 MPa, -12°C: 0.06 MPa, - 8°C: 0.6 MPa, -4°C: 7.2 MPa, 0°C: 15.1 MPa, 4°C: 13.9 MPa, 8°C: 21.0 MPa, 12°C: 23.2 MPa, 16°C: 27.2 MPa, 20°C: 30.1 MPa, 24°C: 29.3 MPa, 28°C: 32.7 MPa, 32°C: 35.1 MPa, 36°C: 35.9 MPa

### Copolymer (C)

0°C :0.08 MPa, 4°C: 0.2 MPa, 8°C: 0.2 MPa, 12°C: 0.4 MPa, 16°C: 1.7 MPa, 20°C: 8.4 MPa, 24°C: 13.8 MPa, 28°C: 17.9 MPa, 32°C: 19.3 MPa, 36°C: 20.7 MPa, 40°C: 22.4 MPa, 44°C: 22.3 MPa, 48°C: 24.4 MPa, 52°C: 26.1 MPa, 56°C: 30.2 MPa, 60°C: 29.3 MPa

### Copolymer (D)

-20°C: 18.2 MPa, -16°C: 23.9 MPa, -12°C: 24.7 MPa, - 8°C: 25.0 MPa, -4°C: 28.6 MPa, 0°C: 33.6 MPa, 4°C: 41.3 MPa, 8°C: 46.1 MPa, 12°C: 47.2 MPa, 16°C: 48.3 MPa

### Copolymer (E)

24°C: 0.1 MPa, 44°C: 0.1 MPa, 64°C: 0.47 MPa, 84°C: 0.8 MPa, 88°C: 0.1 MPa, 92°C: 0.2 MPa, 104°C: 18.8 MPa

### Copolymer (F)

24°C: 1.8 MPa, 40°C: 2.1 MPa, 48°C: 3.4 MPa, 56°C: 5.1 MPa, 64°C: 9.7 MPa, 72°C: 10.7 MPa, 80°C: 10.5 MPa, 88°C: 10.4 MPa, 96°C: 10.9 MPa

### Copolymer (G)

4°C: 11.8 MPa, 8°C: 18.2 MPa, 12°C: 8.4 MPa, 16°C: 19.1 MPa, 24°C: 23.4 MPa, 36°C: 25.7 MPa, 48°C: 26.2 MPa, 60°C: 29.7 MPa

### Copolymer (H)

24°C: 0.2 MPa, 32°C: 8.0 MPa, 48°C: 12.3 MPa, 56°C: 37.5 MPa

### Polymer (c)

32°C: 0.05 MPa, 36°C: 0.07 MPa, 40°C: 0.08 MPa, 44°C: 0.1 MPa, 48°C: 0.1 MPa, 52°C: 0.1 MPa, 56°C: 0.2 MPa, 60°C: 0.1 MPa, 64°C: 0.1 MPa, 68°C: 0.1 MPa, 72°C: 0.03 MPa, 76°C: 0.006 MPa, 80°C: 0.02 MPa, 84°C: 0.05 MPa, 88°C: 0.8 MPa, 92°C: 0.1 MPa, 96°C: 0.4 MPa, 100°C: 37.0 MPa

The copolymers (A) to (D) all exhibit a self-healing property around room temperature, and exhibit a high self-healing property under only one-hour pressure bonding at 16°C, 20°C, 32°C and 8°C, respectively.

The copolymer (E) exhibits a little self-healing property at 64°C, and exhibits a high self-healing property under only one-hour pressure bonding at 104°C. The copolymer (F) exhibits a little self-healing property around room temperature, and exhibits a high self-healing property under only one-hour pressure bonding at 64°C. The results indicate that the temperature at which a high self-healing property is exhibited can be lowered by increasing the length of the siloxane chain.

The copolymer (G) exhibits a self-healing property around room temperature, and exhibits a high self-healing property under only one-hour pressure bonding at 24°C. The copolymer (H) exhibits a little self-healing property around room temperature, and exhibits a high self-healing property under only one-hour pressure bonding at 56°C. The results indicate that the temperature at which a high self-healing property is exhibited can be raised by decreasing the length of the siloxane chain.

For the polymers (a) and (b), measurement of the self-healing property was impossible because it was not possible to form a sample for measurement. The polymer (c) exhibits a high self-healing property under only one-hour pressure bonding at 100°C, but does not exhibits a self-healing property at all at room temperature or higher and 96°C or lower.

A table collectively showing the results is given below. The characters in the table denote the following structural units.

### Silicone:

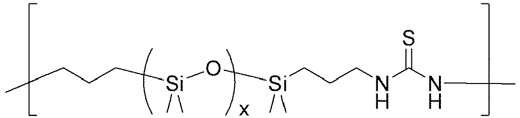

### Dicyclohexyl:

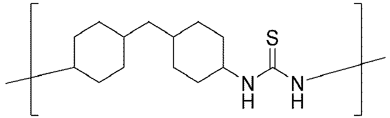

### Methylene:

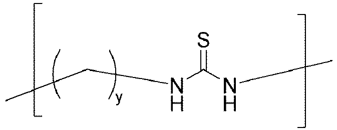

**[Table 1]**

| Example | Example 1 | Example 2 | Example 3 | Example 4 | Example 5 | Example 6 | Example 7 | Example 8 | Comparative Example 1 | Comparative Example 2 | Comparative Example 3 |
|---|---|---|---|---|---|---|---|---|---|---|---|
| Compound | A | B | C | D | E | F | G | H | a | b | c |
| Type of polymer | Random copolymerization | Random copolymerization | Random copolymerization | Random copolymerization | Alternating copolymerization | Alternating copolymerization | Alternating copolymerization | Alternating copolymerization | Homopolymer | Homopolymer | Homopolymer |
| Silicone | 80 | 70 | 60 | 60 | 50 | 50 | 50 | 50 | 100 | | |
| Dicyclohexyl | 20 | 30 | 40 | | 50 | 50 | | | | 100 | |
| Methylene | | | | 40 | | | 50 | 50 | | | 100 |
| Silicone chain, x | 5 | 5 | 5 | 5 | 5 | 41 | 5 | 1 | 5 | - | - |
| Methylene, y | | | | 6 | | | 6 | 6 | | | 8 |
| Weight average molecular weight | 5500 | 5000 | 8300 | 1900 | 110000 | 5200 | 98000 | 98000 | 3200 | Measurement impossible | Measurement impossible |
| Weight average polymerization degree | 10.5 | 10 | 18 | 4.5 | 129 | 2 | 131 | 218 | 5 | Measurement impossible | Measurement impossible |
| Physical properties | | | | | | | | | | | |
| State | Solid | Solid | Solid | Solid | Solid | Solid | Solid | Solid | Liquid | Solid | Solid |
| Self-healing | ○ | ○ | ○ | ○ | ○ | ○ | ○ | ○ | - | - | ○ |
| Self-healing start temperature | < -20 °C | -8°C | 4°C | < -20°C | 64°C | 24°C | 4°C | 24°C | - | - | 100°C |
| Self-healing temperature | 16°C | 20°C | 32°C | 8°C | 104°C | 64°C | 24°C | 56°C | - | - | 100°C |

## Claims

1. A copolymer comprising at least one repeat unit represented by the following general formula (I): 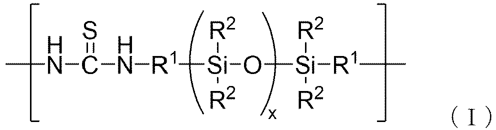 wherein
R¹ represents a divalent hydrocarbon group having 1 to 10 carbon atoms,
R² is independently a hydrogen atom, or a group selected from an alkyl group having 1 to 8 carbon atoms and optionally substituted with a halogen atom, a phenyl group, a (meth)acryloyloxypropyl group and a glycidoxypropyl group,
each of the R² groups may be the same or different, and
x is an integer of 1 or more, and
a repeat unit represented by the following general formula (II): 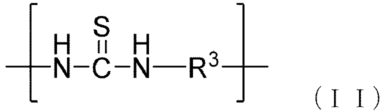
wherein
R³ is the following (a) or (b):
(a) a substituted or unsubstituted alkylene group having 2 to 20 carbon atoms
(b) the following formula (1): 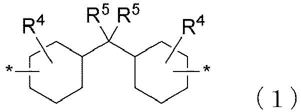
wherein
R₄ is independently a hydrogen atom or an alkyl group having 1 to 8 carbon atoms, and each of the R⁴ groups may be the same or different, and
R⁵ is independently a hydrogen atom or an alkyl group having 1 to 8 carbon atoms,
the two R⁵ groups may be the same or different, and
* represents a bonding site.

2. The copolymer according to claim 1, wherein the repeat unit represented by formula (I) and the repeat unit represented by formula (II) are randomly polymerized.

3. The copolymer according to claim 1 or 2, wherein R² is a methyl group, and has a polystyrene-equivalent weight average molecular weight of 500 to 150,000 as measured by GPC.

4. A self-healing material comprising the copolymer according to any one of claims 1 to 3.

5. A non-covalent-type self-healing material comprising the copolymer according to any one of claims 1 to 3.

6. A resin composition comprising the copolymer according to any one of claims 1 to 3, and a resin selected from polycarbonate, polymethyl acrylate, polymethyl methacrylate, polymethacrylate, polystyrene, polyethylene terephthalate, nylon, polypropylene, an epoxy resin, a silicone resin, and a combination of two or more thereof.

7. A process for preparing a copolymer, the process comprising reacting a raw material containing a compound represented by the following general formula (III): 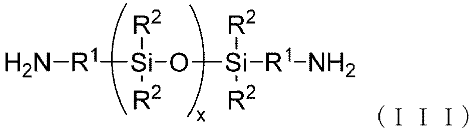
wherein R¹ represents a divalent hydrocarbon group having 1 to 10 carbon atoms, R² is independently a hydrogen atom, or a group selected from an alkyl group having 1 to 8 carbon atoms and optionally substituted with a halogen atom, a phenyl group, a (meth)acryloyloxypropyl group and a glycidoxypropyl group, each of the R² groups may be the same or different, and x is an integer of 1 or more, and
a compound represented by the following general formula (IV):
H₂N-R³-NH₂ (IV)
wherein R³ is the following (a) or (b):
(a) a substituted or unsubstituted alkylene group having 2 to 20 carbon atoms
(b) the following formula (1): 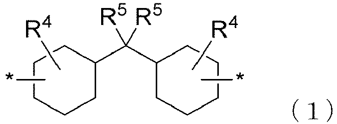
wherein R⁴ is independently a hydrogen atom or an alkyl group having 1 to 8 carbon atoms, and each of the R⁴ groups may be the same or different, and
R⁵ is independently a hydrogen atom or a group selected from alkyl groups having 1 to 8 carbon atoms, the two R⁵ groups may be the same or different, and * represents a bonding site,
with the following compound: 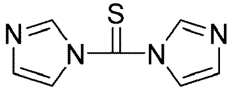
the copolymer comprising a repeat unit represented by the following general formula (I): 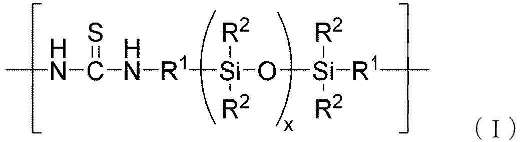
wherein R¹, R² and x are the same as defined in formula (III), and
a repeat unit represented by the following general formula (II): 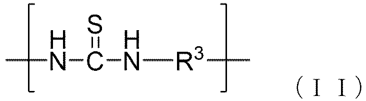
wherein R³ is the same as defined in formula (IV).

8. A process for preparing a copolymer, the process comprising reacting a raw material containing at least one of a compound represented by the following general formula (III) : 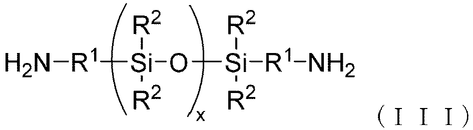
wherein R¹ represents a divalent hydrocarbon group having 1 to 10 carbon atoms, R² is independently a hydrogen atom, or a group selected from an alkyl group having 1 to 8 carbon atoms and optionally substituted with a halogen atom, a phenyl group, a (meth)acryloyloxypropyl group and a glycidoxypropyl group, each of the R² groups may be the same or different, and x is an integer of 1 or more, and
a compound represented by the following general formula (IV):
H₂N-R³-NH₂ (IV)
wherein R³ is the following (a) or (b):
(a) a substituted or unsubstituted alkylene group having 2 to 20 carbon atoms
(b) the following structural formula (1): 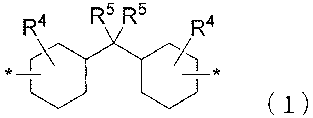
wherein R⁴ is independently a hydrogen atom or an alkyl group having 1 to 8 carbon atoms, and each of the R⁴ groups may be the same or different, and
R⁵ is independently a hydrogen atom or a group selected from alkyl groups having 1 to 8 carbon atoms, the two R⁵ groups may be the same or different, and * represents a bonding site,
with a raw material containing at least one of a compound represented by the following general formula (V): 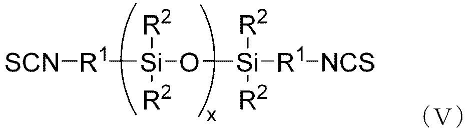
wherein R¹ represents a divalent hydrocarbon group having 1 to 10 carbon atoms, R² is independently a hydrogen atom, or a group selected from an alkyl group having 1 to 8 carbon atoms and optionally substituted with a halogen atom, a phenyl group, a (meth)acryloyloxypropyl group and a glycidoxypropyl group, each of the R² groups may be the same or different, and x is an integer of 1 or more, and
a compound represented by the following general formula (VI):
SCN-R³-NCS ... (V1)
wherein R³ is the following (a) or (b):
(a) a substituted or unsubstituted alkylene group having 2 to 20 carbon atoms
(b) the following formula (1): 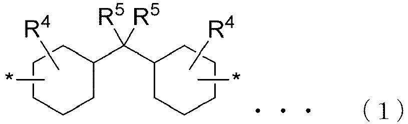
wherein R⁴ is independently a hydrogen atom or an alkyl groups having 1 to 8 carbon atoms, and each of the R⁴ groups may be the same or different, and
R⁵ is independently a hydrogen atom or a group selected from alkyl groups having 1 to 8 carbon atoms, the two R⁵ groups may be the same or different, and * represents a bonding site,
with the proviso that a case wherein a raw material containing only a compound of formula (IV) and a raw material containing only formula (VI) are reacted is excluded,
the copolymer comprising a repeat unit represented by the following general formula (I): 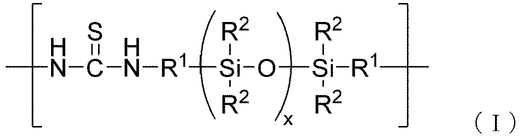
wherein R¹, R² and x are the same as defined in formula (III), and
a repeat unit represented by the following general formula (II): 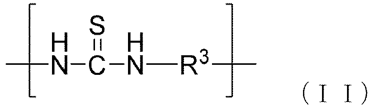
wherein R³ is the same as defined in formula (IV).
